# EUROPEAN PATENT SPECIFICATION

(11) **EP 3 867 579 B1**
(45) Date of publication and mention of the grant of the patent: **04.05.2022**
(21) Application number: 19780184.8
(22) Date of filing: 24.09.2019
(51) Int. Cl.: F25B 49/02

(54) **A CONTROL UNIT HAVING IMPROVED COMPRESSOR CONTROL ALGORITHM**
STEUEREINHEIT MIT VERBESSERTEM KOMPRESSORSTEUERUNGSALGORITHMUS
UNITÉ DE COMMANDE AYANT UN ALGORITHME DE COMMANDE DE COMPRESSEUR AMÉLIORÉ

(30) Priority: 16.10.2018 TR 201815328
(43) Date of publication of application: 25.08.2021
(73) Proprietor: Arçelik Anonim Sirketi, 34445 Istanbul (TR)
(72) Inventor: MARASLI, Sarper, 34950 ISTANBUL (TR); HACIOGLU, Bilgin, 34950 ISTANBUL (TR); SARIAYDIN, Mehmet Emin, 34950 ISTANBUL (TR); SEREZ, Fatih, 34950 ISTANBUL (TR)
(86) International application number: PCT/EP2019/075602
(87) International publication number: WO 2020/078671

(56) References cited:
- EP-A2- 0 921 363
- WO-A1-2018/100166
- DE-A1-102014 221 411

## Description

The present invention relates to a cooling appliance having a control unit having an improved algorithm to control compressors.

In cooling appliances, the compressors are activated by a control unit to run on single or varying speeds depending on the cooling needs of the cooling appliance. Upon loading of the cooling appliance, the compressors are urged to run on corresponding speeds with the help of the control unit and a control algorithm so as to cool the interior of the cooling appliance. In the case of loading the cooling appliance with an article having high heat capacity, the control units fails to run the compressor at responding speeds and as a result the cooling capacity of the refrigerant would be insufficient which leads to a slower cooling of the cooling appliance and thus to customer dissatisfaction.

A prior art publication in the technical field of the present invention may be referred to as CN105928316 among others, the document discloses a cooling appliance that detects loading and increases the speed of the compressor accordingly.

WO2018/100166A1 discloses a cooling appliance according to the preamble of independent claim 1.

An objective of the present invention is to provide a cooling appliance comprising a control unit having an improved compressor control algorithm so as to overcome the negative effects of loading the cooling appliance with big and/or warm articles.

The method realized to achieve the aim of the present invention and disclosed in the first claim as part of a controller configuration and the dependent claim as part of a controller configuration comprises a cooling appliance having a control unit and a compressor. The control unit activates the compressor to initiate an on-cycle on regular intervals so as to cool the interior of the cooling appliance wherein the articles to be cooled are placed. The on-cycles are followed by off-cycles wherein the compressor remains inactive. The control unit measures the current drawn by the compressor and stores this data continuously. Additionally, the control unit divides the on-cycles into smaller time intervals predetermined by the manufacturer and calculates the average current value for each of said time intervals. The control unit also calculates the overall average current value of each on-cycle. At the beginning of each on-cycle, the control unit waits till the end of the first of the said time intervals and meanwhile and calculates the average current value for the said time interval. Afterwards, the control unit compares this value to the overall average current value of the previous on-cycle and decides to maintain the speed of the compressor if the said time interval's average current value is smaller than the overall average current value of the previous on-cycle by a predetermined rate. Otherwise, the control unit waits till the end of the second of the said time intervals and compares the said second time interval's average current value to the first time interval's average current value and increases the speed of the compressor by a predetermined amount if the said second value is higher than the said first value by a predetermined rate. In such case, the control unit keeps increasing the speed of the compressor up to the compressor's maximum speed allowed and maintain the speed of the compressor until the internal temperature of the cooling appliance reaches a predetermined temperature value. As a result of this, the cooling appliance reacts to the loading of big and/or warm articles in a rapid and in an energy efficient manner.

In an embodiment of the invention, the control unit neglects the in-rush current occurring as the compressor is activated. The in-rush current creates a spike in the current value thus causing error in calculations of the average current values. Neglecting the in-rush current increases measurement accuracy of the control unit.

A major advantageous effect of the invention is that the control unit increases the speed of the compressor to match with the heat capacity of the article loaded inside the cooling appliance in a stepwise manner. Therefore the response time of the cooling appliance to big articles is decreased whereas the energy efficiency is increased.

The drawings are not meant to delimit the scope of protection as identified in the claims nor should they be referred to alone in an effort to interpret the scope identified in the claims without recourse to the technical disclosure in the description of the present invention.

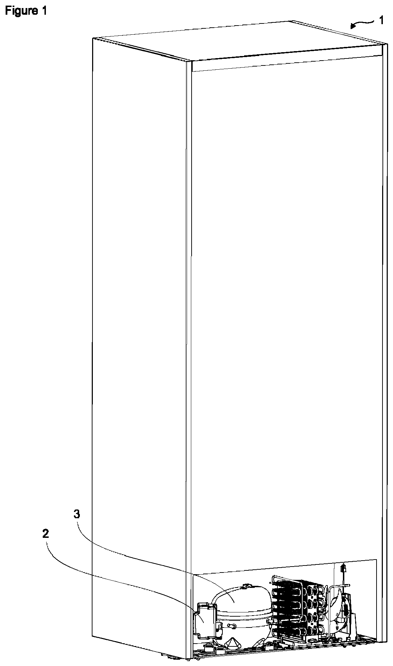

Figure 1 - is a rear view of the cooling appliance.

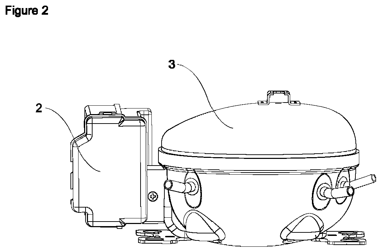

Figure 2 - is a perspective view of the compressor and control unit.

The following numerals are assigned to different parts demonstrated in the drawings and referred to in the present detailed description of the invention:
1. Cooling appliance
2. Control Unit
3. Compressor

The present invention relates to a cooling appliance (1) according to claim 1 and inter alia comprising a control unit (2) and a compressor (3) wherein the control unit (2) is configured to activate the compressor (3) by initiating an on-cycle wherein the coolant is compressed and during which the control unit (2) measures the current drawn by the compressor (3), followed by an off-cycle wherein the compressor (3) remains inactive.

The present invention further comprises that the control unit (2) is configured to divide the on-cycle into predetermined time intervals and calculate the average current value for said time intervals and compare the first time interval's average current value to the overall average current value of the previous on-cycle and
- maintain the speed of the compressor (3) if the said first time interval's average current value is smaller than the overall average current value of the previous on-cycle by a predetermined rate, otherwise
- increase the speed of the compressor (3) by a predetermined amount if the average current value of a time interval is higher than the average current value of the previous time interval inside the same on-cycle by a predetermined rate and keep increasing the speed of the compressor (3) up to compressor's (3) maximum speed allowed and maintain the speed of the compressor (3) as long as the internal temperature of the cooling appliance (1) reaches a predetermined value.

The cooling appliance (1) has an internal volume wherein the articles to be cooled are placed. A thermostat placed inside the internal volume of the cooling appliance (1) detects the temperature of the internal volume of the cooling appliance (1). The thermostat is in connection with the control unit (2) and the control unit (2) activates or deactivates the compressor (3) according to the temperature value of the internal volume of the cooling appliance (1). During normal operation of the cooling appliance (1) and if the user does not open the door of the cooling appliance (1) to load or unload the articles the internal temperature of the cooling appliance (1) is stabilized after a certain time. In this case, the compressor (1) will keep working in on-cycles wherein the coolant is compressed and the internal volume of the cooling appliance (1) is cooled and off-cycles wherein the compressor (3) remains inactive. In the case of the user loading the cooling appliance (1) with articles having high heat capacity, meaning that goods having a big mass or high temperature or both, the internal temperature of the cooling appliance (1) increases. Therefore, the control unit (2) activates the compressor (3) so as to cool the internal volume of the cooling appliance (1). The control unit (2), upon activation of the compressor (3), measures the current drawn by the compressor (3) continuously. The control unit (2) divides the on-cycle into predetermined time intervals and calculates the average current value for each time interval. Meanwhile, the control unit (2) calculates the average current value for each on-cycle. The control unit (2) compares the average current value of the first of said time intervals to the overall average current value of the previous on-cycle and maintains the speed of the compressor (3) if the average current value of the first of the said time intervals is smaller than the overall current value of the previous on-cycle by a predetermined rate. In a preferred embodiment the rate is equal to 1,3. The manufacturer, according to the volume, energy class and application of the cooling appliance can apply different rates such as; 1,2 or 1,4 or 1,5 or 1,6 or 1,7. In the case of failure to provide this prerequisite, the control unit (2) increases the speed of the compressor (3) by a predetermined amount if the average current value of a time interval is higher than the average current value of the previous time interval inside the same on-cycle. By speed, it is meant the round per minute of the compressor and the increase in said amount depends on the manufacturer and the internal volume of the cooling appliance. In a particular application the speed of the compressor is increased stepwise by amounts predetermined by the manufacturer. The control unit (2) increases the speed of the compressor (3) up to compressor's (3) maximum speed and maintain the speed of the compressor (3) as long as it is necessary, meaning that the internal temperature of the cooling appliance (1) reaches a predetermined value. By means of this control unit (2), operating the compressor (2) with aforementioned algorithm, a cooling appliance having a high energy efficiency is achieved. Another advantageous effect of this invention is that the response time to articles having a high heat capacity is decreased, therefore the time required for cooling of said articles in decreased, minimizing the possibility of proliferation of microorganisms inside or on the articles. Also, rapid cooling is achieved thus increasing customer satisfaction.

In another embodiment, the control unit (1) is configured to neglect the in-rush current occurring at the beginning of each on-cycle. When the compressor (3) is first energized, an electrical current that is higher than the required current to operate the compressor (3) will be drawn. The control unit (2) neglects a predetermined time interval at the beginning of each on-cycle therefore improving measurement accuracy of the current drawn at the beginning of each on-cycle.

By means of this invention, the cooling appliance (1) comprising the control unit (2) having an improved control algorithm that is used to activate the compressor (3) upon loading of the cooling appliance (1) with bulky and / or warm articles is achieved wherein the control unit (2) initiates an on-cycle during which the speed of the compressor (3) is increased stepwise depending on the current values drawn by the compressor. As a result, a rapid and energy efficient cooling of the interior of the cooling appliance (1) is achieved.

## Claims

1. A cooling appliance (1) comprising a control unit (2) and a compressor (3) wherein the control unit (2) is configured to activate the compressor (3) by initiating an on-cycle wherein the coolant is compressed and during which the control unit (2) measures the current drawn by the compressor (3), followed by an off-cycle wherein the compressor (3) remains inactive, **characterized in that** the control unit (2) is configured to divide the on-cycle into predetermined time intervals and calculate the average current value for said time intervals and compare the first time interval's average current value to the overall average current value of the previous on-cycle and
- maintain the speed of the compressor (3) if the said first time interval's average current value is smaller than the overall average current value of the previous on-cycle by a predetermined rate, otherwise
- increase the speed of the compressor (3) by a predetermined amount if the average current value of a time interval is higher than the average current value of the previous time interval inside the same on-cycle by a predetermined rate and keep increasing the speed of the compressor (3) up to compressor's (3) maximum speed allowed and maintain the speed of the compressor (3) as long as the internal temperature of the cooling appliance (1) reaches a predetermined value.

2. A cooling appliance (1) according to claim 1 **wherein** the control unit (2) is configured to neglect the in-rush current occurring at the beginning of each on-cycle.

## Patentansprüche

1. Ein Kühlgerät (1) **umfasst** eine Steuereinheit (2) und einen Kompressor (3), wobei die Steuereinheit (2) dazu konfiguriert ist, den Kompressor (3) durch Einleiten eines Einschaltzyklus zu aktivieren wobei das Kühlmittel komprimiert wird und währenddessen die Steuereinheit (2) den vom Kompressor (3) gezogenen Strom misst, gefolgt von einem Ausschaltzyklus, in dem der Kompressor (3) inaktiv bleibt, gekennzeichnet ist es durch die Steuereinheit (2), die dazu konfiguriert ist, den Ein-Zyklus in vorbestimmte Zeitintervalle zu unterteilen und den durchschnittlichen Stromwert für die Zeitintervalle zu berechnen und den durchschnittlichen Stromwert des ersten Zeitintervalls mit dem gesamten durchschnittlichen Stromwert des vorherigen Ein-Zyklus zu vergleichen, und
• die Drehzahl des Kompressors (3) aufrechtzuerhalten, wenn der durchschnittliche Stromwert des ersten Zeitintervalls um eine vorbestimmte Rate kleiner als der durchschnittliche Gesamtstromwert des vorherigen Einschaltzyklus ist, andernfalls
• erhöhen der Drehzahl des Kompressors (3) um einen vorbestimmten Betrag, wenn der durchschnittliche Stromwert eines Zeitintervalls um eine vorbestimmte Rate höher als der durchschnittliche Stromwert des vorherigen Zeitintervalls innerhalb des gleichen Einschaltzyklus ist und erhöhen der Drehzahl des Kompressors (3) weiter bis zur maximal zulässigen Drehzahl des Kompressors (3) und die Drehzahl des Kompressors (3) aufrechtzuerhalten, solange die Innentemperatur des Kühlgeräts (1) einen vorbestimmten Wert erreicht.

2. Ein Kühlgerät (1), wie in Anspruch 1 aufgeführt, **wobei** die Steuereinheit (2) so konfiguriert ist, dass sie den Einschaltstrom vernachlässigt, der zu Beginn jedes Einschaltzyklus auftritt.

## Revendications

1. Un appareil de refroidissement (1) comprenant une unité de commande (2) et un compresseur (3), dans lequel l'unité de commande (2) est configurée pour activer le compresseur (3) en initiant un cycle de marche dans lequel le réfrigérant est comprimé et pendant lequel l'unité de commande (2) mesure le courant tiré par le compresseur (3), suivi par un cycle d'arrêt dans lequel le compresseur (3) reste inactif.,
**est caractérisé en ce que** l'unité de commande (2) est configurée pour diviser le cycle en cours en intervalles de temps prédéterminés et calculer la valeur de courant moyenne pour lesdits intervalles de temps et comparer la valeur de courant moyenne du premier intervalle de temps à la valeur de courant moyenne globale du cycle en cours précédent et
• maintient la vitesse du compresseur (3) si la valeur de courant moyenne dudit premier intervalle de temps est inférieure à la valeur de courant moyenne globale du cycle en marche précédent d'un taux prédéterminé, sinon
• augmente la vitesse du compresseur (3) d'une quantité prédéterminée si la valeur courante moyenne d'un intervalle de temps est supérieure à la valeur courante moyenne de l'intervalle de temps précédent à l'intérieur du même cycle en cours d'un taux prédéterminé et continue à augmenter la vitesse du compresseur (3) jusqu'à la vitesse maximale autorisée du compresseur (3) et maintient la vitesse du compresseur (3) aussi longtemps que la température interne de l'appareil de refroidissement (1) atteint une valeur prédéterminée.

2. Un appareil de refroidissement (1) selon la déclaration 1, **dans lequel** l'unité de commande (2) est configurée pour négliger le courant d'appel se produisant au début de chaque cycle de fonctionnement.
